# EUROPÄISCHE PATENTANMELDUNG

(11) **EP 1 079 289 A2**
(43) Veröffentlichungstag der Anmeldung: **28.02.2001**
(21) Anmeldenummer: 00116525.7
(22) Anmeldetag: 31.07.2000
(51) Int. Cl.: G05B 19/409

(54) **Projektierungseinheit für korrespondierende Diagnosedatensätze eines Systems mit Steuerungseinheit und Bedien- und/oder Beobachtungseinheit, und System mit Mitteln zum Versionsvergleich von zugeordneten Diagnosedatensätzen**

(30) Priorität: 20.08.1999 DE 29914463 U
(71) Anmelder: SIEMENS AKTIENGESELLSCHAFT, 80333 München (DE)
(72) Erfinder: Becher, Matthias, 90482 Nürnberg (DE); Beck, Hans-Joachim, Dipl.-Ing. (FH), 76287 Rheinstetten (DE); Bremer-Hurrle, Karla, Dipl.-Ing. (FH), 76870 Kandel (DE); Hammon, Harald, Dipl.-Ing. (FH), 90471 Nürnberg (DE); Rupprecht, Georg, Dipl.-Inf., 90409 Nürnberg (DE); Schmidt, Gerhard, Dipl.Ök.Ing.Dipl.-Inf., 92318 Neumarkt (DE)

(57) **Zusammenfassung**

Die Projektierungseinheit weist auf erste Projektierungsmittel, womit ein erster Diagnosedatensatz z.B. für eine Steuerungseinheit generierbar ist, und zweite Projektierungsmittel, womit der erste in einen zweiten, korrespondierenden Diagnosedatensatz z.B. für eine Bedien- und/oder Beobachtungseinheit konvertierbar ist. In einem System ist in der Steuerungseinheit ein erster Diagnosedatensatz und in der Bedien- und/oder Beobachtungseinheit ein zweiter Diagnosedatensatz geladen. Es sind Mittel zum Versionsvergleich der Diagnosedatensätze vorhanden, die überprüfen, ob der erste und zweite Diagnosedatensatz zueinander korrespondieren.

## Beschreibung

Technische Prozesse und Anlagen, z.B. technische Fertigungsprozesse, wie Schweißanlagen in der Automobilindustrie, oder technische Verarbeitungsprozesse, z.B. Raffinerien in der petrochemischen Industrie, werden mit Hilfe von digitalen Rechneranlagen gesteuert. Dabei können neben der zur eigentlichen Steuerung des jeweiligen Prozesses dienenden industriellen Steuerungseinheit auch zumindest eine zusätzliche datenverarbeitende Einheit vorhanden sein, die vorrangig zur Anzeige und/oder Vorgabe von Prozeßdaten dienen. Derartige industrielle Bedien- und Beobachtungseinheiten, welche auch als sogenannte Operator Panels bezeichnet werden, sind eigenständige Datenverarbeitungseinheiten. Diese sind mit der zur Prozeßsteuerung dienenden industriellen Steuerungseinheit z.B. über einen industriellen Datenbus verbunden und ermöglichen eine Ausgabe und/oder Vorgabe von Prozeßdaten der Steuerungseinheit meist in einer übersichtlichen graphischen Form z.B. auf panelartigen Anzeigevorrichtungen. Hierzu werden die Art der Anzeige und die verfügbaren Anzeige- und Eingabemittel, wie z.B. sogenannte Touch Screens, Tastaturen, programmierbare Steuertasten u.v.m. abhängig von der Art des dazugehörigen technischen Prozesses anwendungsabhängig programmiert.

In einem System, welches zumindest eine an einen technischen Prozeß angekoppelte Steuerungseinheit und eine über einen industriellen Datenbus mit der Steuerungseinheit verbundene Bedien- und Beobachtungseinheit aufweist, werden Prozeßdaten zu unterschiedlichen Zwecken verarbeitet.

Prozeßdaten enthalten z.B. Stellsignale, die von der Steuerungseinheit erzeugt und an bestimmte Betriebsmittel des technischen Prozesses ausgegeben werden, um deren Betriebszustand zu beeinflussen. Solche Prozeßdaten umfassen auch Meßwerte, die von Meßgebern im technischen Prozeß erfaßt und von der Steuerungseinheit z.B. wiederum zur Bildung von Stellsignalen ausgewertet werden. Prozeßdaten, welche der Gruppe der Stellsignale und Meßwerte zugeordnet werden können, werden vom System vorrangig zur Führung des technischen Prozesses im Rahmen des ordnungsgemäßen Betriebsablaufes verarbeitet.

Prozeßdaten können zusätzlich Signale aus dem technischen Prozeß enthalten, die zu sicherheitsrelevanten Zwecken weiterverarbeitet werden. Hierbei handelt es sich z.B. um externe Meldesignale, die z.B. die Verfügbarkeit bzw. Störung eines Betriebsmittels, Übertragungskanals u.v.m. signalisieren.

Zur sicherheitsrelevanten Verarbeitung zumindest von derartigen externen Meldesignalen sowohl in der Steuerungseinheit als auch in der Bedien- und Beobachtungseinheit des Systems wird ein sogenannter Diagnosedatensatz eingesetzt. In einem Diagnosedatensatz werden vorprogrammierte Reaktionen des Systems und deren Einheiten hinterlegt, die bei Auftreten von unerwünschten Ereignissen im technischen Prozeß und/oder den Einheiten des Systems aktiviert werden sollen. Vorteilhaft erfolgt eine sicherheitsrelevante Verarbeitung von externen Meldesignalen gemeinsam mit internen Meldesignalen, welche zusätzlich die Verfügbarkeit bzw. die Störung von Elementen in der Steuerungseinheit, in der Bedien- und Beobachtungseinheit oder in dem Datenbus des Systems signalisieren.

Bei der Programmierung eines Diagnosedatensatzes muß insbesondere die gesamte Instrumentierung des jeweiligen technischen Prozesses und die darauf abgestimmte Projektierung eines Systems, welches zumindest eine Steuerungseinheit und eine Bedien- und Beobachtungseinheit mit verbindendem Datenbus aufweist, berücksichtigt werden. Dabei betrifft die Instrumentierung insbesondere die Ausrüstung des technischen Prozesses mit Meßgebern zur Erfassung von Meßwerten und mit Stellgliedern zur Ausgabe von Stellsignalen. Ferner betrifft die Projektierung z.B. die Belegung von Ein- und Ausgangsschnittstellen des Systems mit Signalen u.v.m.. Für eine ordnungsgemäße Funktion eines Diagnosesystems muß ein Diagnosedatensatz möglichst lückenlos die anwendungsabhängige Instrumentierung des technischen Prozesses und die dazu korrespondierende Projektierung des Systems abbilden.

Systeme der oben beschriebenen Art müssen in der Regel im online Betrieb einen technischen Prozeß unterbrechungsfrei steuern. Zur Projektierung insbesondere der Steuerungseinheit und der Bedien- und Beobachtungseinheit in einem solchen System müssen somit externe Projektierungseinheiten bereitstehen, welche in der Regel eigenständige Rechnereinheiten darstellen. Mit einer Projektierungseinheit ist es insbesondere möglich, mit Hilfe von speziellen Projektierungsprogrammen insbesondere Änderungen in einem Steuerungsprogramm für die Steuerungseinheit und einem Betriebsprogramm für die Bedien- und Beobachtungseinheit eines Systems quasi offline vorzunehmen und veränderte Datensätze dann mit einer möglichst kurzzeitigen Unterbrechung des online Betriebs in die Steuerungseinheit und die Bedien- und Beobachtungseinheit eines Systems zu laden.

In einem System der oben beschriebenen Art werden externe Projektierungseinheiten auch dazu eingesetzt, Diagnosedatensätze zu generieren. Dabei tritt das Problem auf, daß in der Regel der für die Steuerungseinheit eines Systems bestimmte Diagnosedatensatz ein anderes datentechnisches Format aufweist als der für eine Bedien- und Beobachtungseinheit des Systems bestimmte Diagnosedatensatz, obwohl die Grundlage für die Projektierung beider Diagnosedatensätze eine Instrumentierung des jeweiligen technischen Prozesses und eine Projektierung des Systems darstellen.

Dabei tritt das Problem auf, daß die Diagnosedatensätze selbst nach einer nur geringfügigen Anpassung bei einer der Komponenten des Systems bzw. im technischen Prozeß mittels der Projektierungseinheit überarbeitet und erneut vollständig in die dazugehörige Steuerungseinheit und in die Bedien- und Beobachtungseinheit des Systems geladen werden müssen, um eine Aktivierung der Änderungen zu bewirken. Dabei ist es in der Praxis nicht auszuschließen, daß der für die Steuerungseinheit bestimmte Diagnosedatensatz nicht vollständig korrespondiert zu dem für die Bedien- und Beobachtungseinheit des Systems bestimmten Diagnosedatensatz. Beim online Betrieb des Systems können derartige Inkonsistenzen u.U. fatale Folgen haben. So kann eine Inkonsistenz z.B. dazu führen, daß das Diagnosesystem einen Fehler nicht erkennt und somit z.B. keine entsprechende Meldung auf der Bedien- und Beobachtungseinheit ausgibt. Im ungünstigsten Fall kann das Diagnosesystem auf Grund von nicht zueinander korrespondierender bzw. inkonsistenter Diagnosedatensätze in der Steuerungseinheit und der Bedien- und Beobachtungseinheit unerwünschte Aktionen auslösen, welche in kleinem Zusammenhang steht mit dem vorliegenden Fehler.

Der Erfindung liegt die Aufgabe zugrunde, ein System und eine entsprechende Projektierungseinheit anzugeben, womit das Auftreten von zueinander inkonsistenten Diagnosedatensätzen in einem System mit einer Steuerungseinheit und einer damit über einen Datenbus verbundenen Bedien- und Beobachtungseinheit vermieden werden kann.

Diese Aufgabe wird gelöst mit der in den Ansprüchen angegebenen Projektierungseinheit und dem angegebenen System.

Eine erfindungsgemäße Projektierungseinheit betrifft ein System, welches zumindest aufweist eine Steuerungseinheit zum Austausch von Prozeßdaten mit einem technischen Prozeß und mindestens einer Bedien- und/oder Beobachtungseinheit zur Anzeige und/oder Vorgabe von Prozeßdaten. Die erfindungsgemäße Projektierungseinheit ist dadurch gekennzeichnet, daß die Projektierungseinheit zumindest aufweist erste Projektierungsmittel, womit zumindest ein erster Diagnosedatensatz für die Steuerungseinheit oder die Bedien- und/oder Beobachtungseinheit generierbar ist, und zweite Projektierungsmittel, womit zumindest der erste Diagnosedatensatz konvertierbar ist in einen zweiten, korrespondierenden Diagnosedatensatz für die Bedien- und/oder Beobachtungseinheit oder die Steuerungseinheit.

Die Projektierungseinheit gemäß der Erfindung weist den Vorteil auf, daß insbesondere von einem Anwendungsprogrammierer unter Zuhilfenahme der entsprechenden Projektierungsmittel nur ein Diagnosedatensatz generiert werden muß, der entweder für die Steuerungseinheit oder für die Bedien- und/oder Beobachtungseinheit bestimmt ist. Der für die andere Komponente des Systems, d.h. die Bedien- und/oder Beobachtungseinheit oder die Steuerungseinheit erforderliche Diagnosedatensatz wird von den Projektierungsmitteln, die der jeweiligen Komponente zugeordnet sind, durch Konversion des ersten Diagnosedatensatzes automatisch generiert. Damit ist die Wahrscheinlichkeit, daß die beiden Diagnosedatensätze aufgrund unerwarteter Fehler voneinander abweichen, erheblich reduziert.

Bei einer vorteilhaften Ausführungsform der Projektierungseinheit weisen die ersten Projektierungsmittel dem ersten Diagnosedatensatz eine erste Versionskennung zu, und die zweiten Projektierungsmittel dem zweiten Diagnosedatensatz eine zweite Versionskennung zu, die zur ersten Versionskennung des ersten Diagnosedatensatzes korrespondiert.

Diese Ausführung bietet den Vorteil, daß eine Detektion von möglichen Abweichungen der beiden Diagnosedatensätze auf einfache und schnelle Weise durch einen Vergleich der jeweiligen Versionskennungen möglich ist.

Ein System gemäß der Erfindung dient zur Steuerung, Bedienung- und/oder Beobachtung eines technischen Prozesses, und weist zumindest auf eine Steuerungseinheit zum Austausch von Prozeßdaten mit einem technischen Prozeß, mindestens eine Bedien- und/oder Beobachtungseinheit zur Anzeige und/oder Vorgabe von Prozeßdaten, und einen Datenbus zur Verbindung von Steuerungseinheit und Bedien- und/oder Beobachtungseinheit auf. Das erfindungsgemäße System ist dadurch gekennzeichnet, daß in der Steuerungseinheit zumindest ein erster Diagnosedatensatz geladen ist, der eine erste Versionskennung aufweist, in der Bedien- und/oder Beobachtungseinheit zumindest ein zweiter Diagnosedatensatz geladen ist, der eine zweite Versionskennung aufweist, und Mittel zum Versionsvergleich der Diagnosedatensätze vorhanden sind, die überprüfen, ob die Versionskennungen des ersten und zweiten Diagnosedatensatzes zueinander korrespondieren.

Das erfindungsgemäße System weist den Vorteil auf, daß mögliche Inkonsistenzen der Diagnosedatensätze durch einen Vergleich der Versionskennungen der in der Steuerungseinheit Version mit der in der Bedien- und/oder Beobachtungseinheit geladenen Version detektiert werden kann.

Vorteilhafte weitere Ausgestaltungen der Projektierungseinheit und des Systems sind in den jeweiligen Unteransprüchen enthalten.

Die Erfindung und weitere vorteilhafte Ausführungen derselben werden an Hand der nachfolgend kurz angegebenen Figuren näher erläutert. Dabei zeigt
- Figur 1 :: das Prinzipschaltbild einer beispielhaften Projektierungseinheit gemäß der Erfindung, und
- Figur 2 :: das Prinzipschaltbild eines beispielhaften Systems zur Steuerung, Bedienung- und/oder Beobachtung eines technischen Prozesses gemäß der Erfindung, welches mit einer Projektierungseinheit gemäß Figur 1 zum Download von Diagnosedatensätzen verbindbar ist.

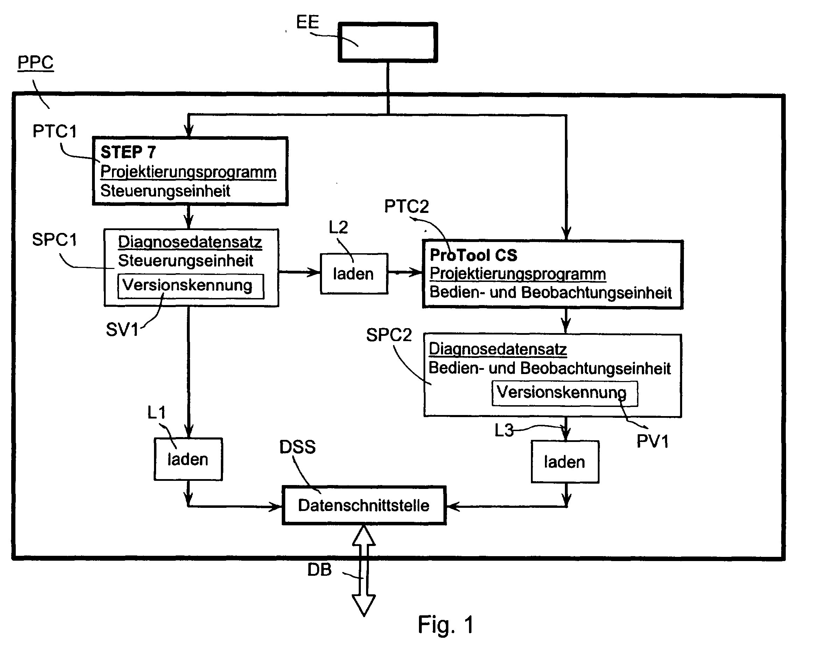

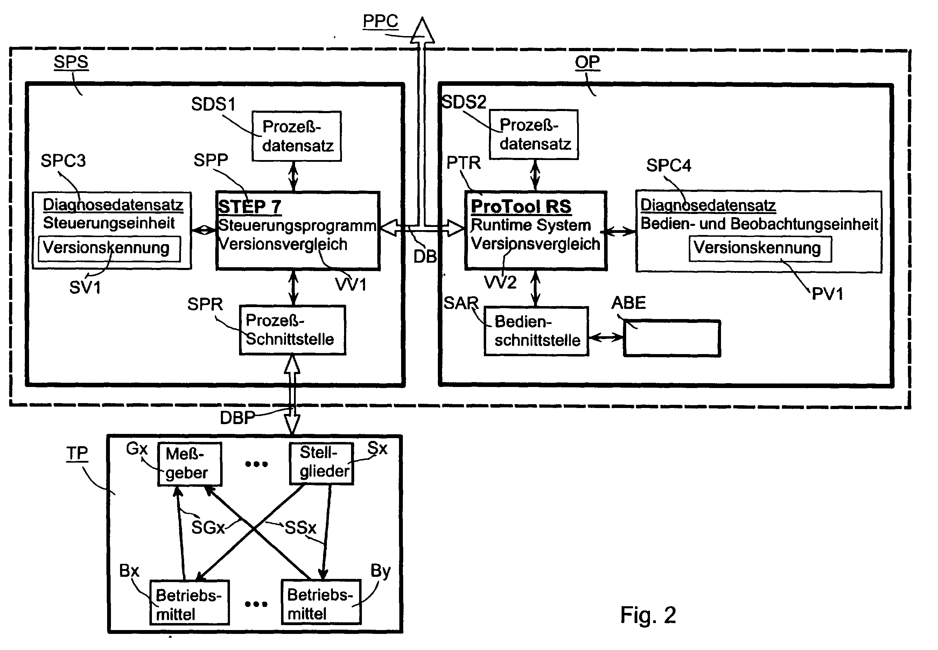

Figur 1 zeigt beispielhaft das Prinzipschaltbild einer Projektierungseinheit PPC gemäß der vorliegenden Erfindung. Wie bereits oben ausgeführt, ist eine solche Einheit dafür vorgesehen, insbesondere Anwendungsprogramme, Projektierungen und ausgewählte Datensätze für ein System zu generieren, welches zumindest eine Steuerungseinheit zum Austausch von Prozeßdaten mit einem technischen Prozeß und mindestens eine Bedien- und/oder Beobachtungseinheit zur Anzeige und/oder Vorgabe von Prozeßdaten aufweist. Die Einheiten eines solches Systems sind vorteilhaft untereinander über einen Datenbus verbunden, und auch über diesen Datenbus bei Bedarf mit der Projektierungseinheit verbindbar. Ein System dieser Art wird nachfolgend am Beispiel der Figur 2 noch näher erläutert werden.

In Figur 1 ist an die Projektierungseinheit PPC beispielhaft mindestens eine Eingabeeinheit EE, z.B. eine Tastatur, ein graphisches Bedienmittel, wie z.B. eine sogenannte Computermaus oder ähnliches, angeschlossen. Hiermit ist die Projektierungseinheit PPC für eine Person so bedienbar, daß insbesondere ein Diagnosedatensatz generiert bzw. angepaßt werden kann. Hierzu weist die Projektierungseinheit PPC zumindest erste Projektierungsmittel PTC1 auf, womit zumindest ein erster Diagnosedatensatz SPC1 generierbar ist. Im Beispiel der Figur 1 sind die ersten Projektierungsmittel PTC1 in Form eines auf der Basis der Programmiersprache STEP 7 basierenden Projektierungsprogrammes ausgeführt. Der hierdurch generierbare Diagnosedatensatz SPC1 ist beispielhaft für eine Steuerungseinheit SPS vorgesehen. Eine solche ist beispielhaft in Figur 2 dargestellt.

Erfindungsgemäß weist die Projektierungseinheit PPC zweite Projektierungsmittel PTC2 auf, womit zumindest der erste Diagnosedatensatz SPC1 konvertierbar ist in einen zweiten Diagnosedatensatz SPC2, der im Beispiel der Figur 1 für eine Bedien- und/oder Beobachtungseinheit OP vorgesehen ist. Eine solche ist ebenfalls beispielhaft in Figur 2 dargestellt. In Figur 1 sind hierzu Mittel L2 vorgesehen, womit der erste Diagnosedatensatz SPC1 zum Zwecke der Konvertierung in die zweiten Projektierungsmittel PTC2 ladbar ist. Im Beispiel der Figur 1 sind die zweiten Projektierungsmittel PTC2 in Form eines auf der Basis der Programmiersprache ProTool CS basierenden Projektierungsprogrammes ausgeführt.

Beide Diagnosedatensätze SPC1 und SPC2 können dann mit Hilfe weiterer Lademittel L1, L2, wobei es sich z.B. um sogenannte Softwaretreiber handeln kann, einer Datenschnittstelle DSS der Projektierungseinheit PPC zugeführt werden. An die Datenschnittstelle kann eine Datenbus DB angeschlossen sein, über den z.B. der Diagnosedatensatz SPC1 in eine Steuerungseinheit SPS und der Diagnosedatensatz SPC2 in eine Bedien- und/oder Beobachtungseinheit OP geladen werden kann.

Die in Figur 1 dargestellte Projektierungseinheit PPC weist somit den Vorteil auf, daß eine Person nur einen Diagnosedatensatz programmieren muß, im Beispiel der Figur 1 den für die Steuerungseinheit SPS vorgesehenen Diagnosedatensatz SPC1. Der zweite, im Beispiel der Figur 1 für die Bedien- und/oder Beobachtungseinheit OP vorgesehene Diagnosedatensatz SPC2, wird mit Hilfe der zweiten Projektierungsmittel PTC2 automatisch aus dem ersten generiert. Hiermit können unerwünschte Abweichungen zwischen den beiden Diagnosedatensätze nahezu vollkommen ausgeschlossen werden.

Selbstverständlich ist es bei einer anderen Ausführung auch möglich, daß eine Person mit Hilfe einer Eingabeeinheit EE und den Projektierungsmitteln PTC2 den für die Bedien- und/oder Beobachtungseinheit OP vorgesehenen Diagnosedatensatz SPC2 programmiert, und der für die Steuerungseinheit SPS vorgesehene Diagnosedatensatz SPC1 mit Hilfe der Projektierungsmittel PTC1 aus diesem Diagnosedatensatz SPC2 automatisch generiert wird. Ferner können die Projektierungsmittel PTC1 bzw. PTC2 auch dafür verwendet werden, um spezifische Anwendungsprogramme zu erstellen bzw. anzupassen, d.h. ein Steuerungsprogramm für die Steuerungseinheit SPS und ein Betriebsprogramm für die Bedien- und/oder Beobachtungseinheit OP. Diese spezifischen Anwendungsprogramme können wiederum über die Datenschnittstelle DSS und einen angeschlossenen Datenbus in die entsprechende Einheit geladen werden. Vorteilhaft stellt die Projektierungseinheit PPC eine programmgesteuerte Recheneinheit dar, z.B. einen sogenannten Projektierungs-PC, womit die ersten und zweiten Projektierungsmittel PTC1 und PTC2 in Programmform ausführbar sind.

Die Figur 1 zeigt bereits eine vorteilhafte, weitere Ausführungsform der Erfindung. Dabei weisen in der Projektierungseinheit PPC die ersten Projektierungsmittel PTC1 dem ersten Diagnosedatensatz SPC1 zusätzlich eine erste Versionskennung SV1 zu, und die zweiten Projektierungsmittel PTC2 dem zweiten Diagnosedatensatz SPC2 zusätzlich eine zweite Versionskennung PV1 zu, die zur ersten Versionskennung SV1 des ersten Diagnosedatensatzes SPC1 korrespondiert. Die Zuordnung von Versionskennungen erleichtert eine Auswertbarkeit erheblich. So ist es durch einen einfachen Vergleich der Versionskennungen SV1, PV1 auf einfache Weise möglich, zu erkennen, ob Diagnosedatensätze zueinander korrespondieren. Dies wird nachfolgend am Beispiel der Figur 2 noch näher erläutert werden. Vorteilhaft werden die Diagnosedatensätze SPC1 und SPC2 gemeinsam mit den zugeordneten Versionskennungen über die Mittel L1, L2 und den Datenbus DB in die zugeordneten Einheiten des Systems geladen.

Figur 2 zeigt beispielhaft ein derartiges System im Inneren einer strichlierten Umrabmung. Das System weist zumindest eine Steuerungseinheit SPS zum Austausch von Prozeßdaten SGx, SSx mit einem technischen Prozeß TP und mindestens eine Bedien- und/oder Beobachtungseinheit OP zur Anzeige und/oder Vorgabe von Prozeßdaten z.B. mittels Anzeige- und Bedienelementen ABE auf.

Ein Datenbus DB dient einerseits zur Verbindung von Steuerungseinheit SPS und Bedien- und/oder Beobachtungseinheit OP des Systems untereinander, und kann andererseits vorteilhaft auch die Ankoppelbarkeit einer Projektierungseinheit PPC der oben genannten Art mit den Einheiten des Systems ermöglichen. Bevorzugt über einen zweiten Datenbus DBP kann die Steuerungseinheit SPS z.B. mittels einer internen Prozeßschnittstelle SPR mit einem technischen Prozeß TP verbunden sein und Prozeßdaten austauschen.

Figur 2 zeigt im unteren Bereich die Struktur eines technischen Prozesses TP in Form einer symbolischen Darstellung. Der technische Prozeß weist eine u.U. große Anzahl an Betriebsmitteln Bx, By auf. Dabei kann es sich z.B. um elektrische Antriebe, Heizstrecken u.v.m. handeln. Der Zustand dieser Betriebsmittel kann einerseits über Meßgeber Gx in Form von Meßwerten SGx erfaßt werden. Die Meßwerte SGx stellen einen Teil der Prozeßdaten dar und können über den zweiten Datenbus DBP zur weiteren Verarbeitung an die Steuerungseinheit SPS übertragen werden. Andererseits kann der Zustand der Betriebsmittel Bx, By auch von der Steuerungseinheit SPS beeinflußt werden. Hierzu werden Steuerungssignale SSx insbesondere durch Auswertung von Meßwerten mittels eines in der Steuerungseinheit SPS ablaufenden Steuerungsprogramms SPP ermittelt und über den Datenbus DBP an entsprechende Stellglieder Sx im technischen Prozeß TP ausgegeben. Die Steuerungssignale SSx stellen ebenfalls einen Teil der Prozeßdaten dar. Ein aktuelles Abbild dieser Prozeßdaten kann in Form eines Prozeßdatensatzes SDS1 in der Steuerungseinheit SPS zwischengespeichert werden.

Ein Prozeßdatensatz bzw. Teile davon können auch über den Datenbus DB an die Bedien- und Beobachtungseinheit OP übertragen, dort gegebenenfalls in einem weiteren Speicherelement SDS2 zwischengespeichert und mittels eines Betriebsprogrammes PTR, welches in Figur 1 als ProTools RS Runtime System bezeichnet ist, an eine Bedienschnittstelle SAR ausgegeben und auf angeschlossenen Anzeige- und Bedienelementen ABE ausgegebene werden. In umgekehrter Wirkungsrichtung können Prozeßdaten Z.B. in Form von Sollwerten an den Anzeige- und Bedienelementen ABE vorgegeben und vom Betriebsprogramm PTR der Bedien- und/oder Beobachtungseinheit OP zur Weiterverarbeitung im Steuerungsprogramm SPP der Steuerungseinheit SPS über den Datenbus DB übertragen werden.

Vorteilhaft kann weiterhin über den Datenbus DB einerseits in die Steuerungseinheit SPS zumindest ein erster Diagnosedatensatz SPC1, bevorzugt komplett mit einer zugeordneten ersten Versionskennung SV1, geladen und z.B. in Speichermitteln SPC3 hinterlegt werden. Andererseits kann in die Bedien- und/oder Beobachtungseinheit OP zumindest ein zweiter Diagnosedatensatz SPC2, wiederum bevorzugt komplett mit einer zugeordneten zweiten Versionskennung SV2, geladen und z.B. in Speichermitteln SPC4 hinterlegt werden.

Erfindungsgemäß weist das System Mittel VV1, VV2 auf, womit ein Versionsvergleich der Diagnosedatensätze SPC3, SPC4 durchgeführt werden kann. Hiermit ist eine Überprüfung möglich, ob die Diagnosedatensätze SPC3, SPC4 zueinander korrespondieren. Vorteilhaft können hierzu gemäß einer weiteren Ausführung der Erfindung die Versionskennungen SV1, PV1 des ersten und zweiten Diagnosedatensatzes SPC3, SPC4 ausgewertet werden.

Vorteilhaft ist das Mittel VV1 zum Versionsvergleich in einem Steuerungsprogramm SPP der Steuerungseinheit SPS z.B. in Form einer Unterprogrammroutine integriert und kann bei Bedarf ausgeführt werden. Entsprechend ist vorteilhaft das Mittel VV2 zum Versionsvergleich in einem Betriebsprogramm PTR der Bedien- und/oder Beobachtungseinheit OP integriert, und kann bei Bedarf u.U. gemeinsam oder in Zusammenarbeit mit dem Mittel VV1 ausgeführt werden.

Besonders vorteilhaft werden die Mittel VV1, VV2 zum Versionsvergleich der Diagnosedatensätze SPC3, SPC4 bei einem Systemstart der Steuerungseinheit SPS aktiviert. Wird dabei eine Abweichung zwischen den Versionskennungen SV1, PV1 der in der Steuerungseinheit SPS und der Bedien- und/oder Beobachtungseinheit OP geladenen Diagnosedatensätze erkannt, so kann z.B. eine Fehlermeldung generiert und z.B. auf den Anzeige- und Bedienelementen ABE der Bedien- und/oder Beobachtungseinheit OP ausgegeben werden. Bei einer weiteren Ausführungsform der Erfindung können die Mittel VV1, VV2 zum Versionsvergleich der Diagnosedatensätze SPC3, SPC4 bei Detektion einer Abweichung zwischen den Versionskennungen SV1, PV1 die Übertragung eines erster Diagnosedatensatzes SPC1 in die Steuerungseinheit SPS und/oder eines zweiten Diagnosedatensatzes SPC2 in die Bedien- und/oder Beobachtungseinheit OP anfordern. Für den Fall, daß die Einheiten SPS und OP des Systems über den Datenbus DB bereits mit einer Projektierungseinheit PPC verbunden sind, kann die Übertragung aktualisierter und vor allem konsistenter Diagnosedatensätze SPC1, SPC2 auch automatisch durchgeführt werden.

## Patentansprüche

1. Projektierungseinheit für ein System, welches zumindest aufweist eine Steuerungseinheit (SPS) zum Austausch von Prozeßdaten (SGx,SSx) mit einem technischen Prozeß (TP) und mindestens eine Bedien- und/oder Beobachtungseinheit (OP) zur Anzeige und/oder Vorgabe von Prozeßdaten (SGx,SSx),
**dadurch gekennzeichnet**, daß
die Projektierungseinheit (PPC) zumindest aufweist
a) erste Projektierungsmittel (PTC1), womit zumindest ein erster Diagnosedatensatz (SPC1) für die Steuerungseinheit (SPS) oder die Bedien- und/oder Beobachtungseinheit (OP) generierbar ist, und
b) zweite Projektierungsmittel (PTC2), womit zumindest der erste Diagnosedatensatz (SPC1) konvertierbar ist in einen zweiten, korrespondierenden Diagnosedatensatz (SPC2) für die Bedien- und/oder Beobachtungseinheit (OP) oder die Steuerungseinheit (SPS).

2. Projektierungseinheit nach Anspruch 1, **dadurch gekennzeichnet**, daß
a) die ersten Projektierungsmittel (PTC1) dem ersten Diagnosedatensatz (SPC1) eine erste Versionskennung (SV1) zuweisen, und
b) die zweiten Projektierungsmittel (PTC2) dem zweiten Diagnosedatensatz (SPC2) eine zweite Versionskennung (PV1) zuweisen, die zur ersten Versionskennung (SV1) des ersten Diagnosedatensatzes (SPC1) korrespondiert.

3. Projektierungseinheit (PPC) nach Anspruch 1 oder 2, **gekennzeichnet durch** eine Datenschnittstelle (DSS), worüber ein erster Diagnosedatensatz (SPC1) in eine Steuerungseinheit (SPS) oder Bedien- und/oder Beobachtungseinheit (OP), und ein zweiter Diagnosedatensatz (SPC2) in eine Bedien- und/oder Beobachtungseinheit (OP) oder Steuerungseinheit (SPS) ladbar sind.

4. Projektierungseinheit (PPC) nach Anspruch 1, 2 oder 3, **dadurch gekennzeichnet**, daß die ersten und zweiten Projektierungsmittel (PTC1,PTC2) Programme sind, welche von einer programmgesteuerten Recheneinheit ausführbar sind.

5. System zur Steuerung, Bedienung- und/oder Beobachtung eines technischen Prozesses (TP), welches zumindest aufweist
a) eine Steuerungseinheit (SPS) zum Austausch von Prozeßdaten (SGx,SSx) mit einem technischen Prozeß (TP),
b) mindestens eine Bedien- und/oder Beobachtungseinheit (OP) zur Anzeige und/oder Vorgabe von Prozeßdaten, und
c) einen Datenbus (DB) zur Verbindung von Steuerungseinheit (SPS) und Bedien- und/oder Beobachtungseinheit (OP)
**dadurch gekennzeichnet**, daß
d) in der Steuerungseinheit (SPS) zumindest ein erster Diagnosedatensatz (SPC3) geladen ist,
e) in der Bedien- und/oder Beobachtungseinheit (OP) zumindest ein zweiter Diagnosedatensatz (SPC4) geladen ist, und
f) Mittel (VV1,VV2) zum Versionsvergleich der Diagnosedatensätze (SPC3,SPC4) vorhanden sind, die überprüfen, ob die Diagnosedatensätze (SPC3,SPC4) zueinander korrespondieren.

6. System nach Anspruch 5, **dadurch gekennzeichnet**, daß
a) der erste Diagnosedatensatz (SPC3) eine erste Versionskennung (SV1) aufweist,
b) der zweite Diagnosedatensatz (SPC4) eine zweite Versionskennung (SV1) aufweist, und
c) die Mittel (VV1,VV2) zum Versionsvergleich der Diagnosedatensätze (SPC3,SPC4) überprüfen, ob die Versionskennungen (SV1,PV1) des ersten und zweiten Diagnosedatensatzes (SPC3,SPC4) zueinander korrespondieren.

7. System nach Anspruch 5 oder 6, **dadurch gekennzeichnet,** daß die Mittel (VV1,VV2) zum Versionsvergleich der Diagnosedatensätze (SPC3,SPC4) bei einem Systemstart der Steuerungseinheit (SPS) aktiviert werden.

8. System nach einem der Ansprüche 5 bis 7, **dadurch gekennzeichnet**, daß die Mittel (VV1,VV2) zum Versionsvergleich der Diagnosedatensätze (SPC3,SPC4) bei Detektion einer Abweichung eine Fehlermeldung generieren.

9. System nach einem der Ansprüche 5 bis 8, **dadurch gekennzeichnet**, daß an den Datenbus (DB) eine Projektierungseinheit (PPC) nach einem der Ansprüche 1 bis 4 anschließbar ist.

10. System nach Anspruch 9, **dadurch gekennzeichnet**, daß die Mittel (VV1,VV2) zum Versionsvergleich der Diagnosedatensätze (SPC3,SPC4) bei Detektion einer Abweichung die Übertragung eines erster Diagnosedatensatzes (SPC1) in die Steuerungseinheit (SPS) und/oder eines zweiten Diagnosedatensatzes (SPC2) in die Bedien- und/oder Beobachtungseinheit (OP) anfordern.
